# EUROPEAN PATENT APPLICATION

(11) **EP 1 703 735 A2**
(43) Date of publication of application: **20.09.2006**
(21) Application number: 05023549.8
(22) Date of filing: 27.10.2005
(51) Int. Cl.: H04N 7/26

(54) **Method and system for distributing video encoder processing**

(30) Priority: 16.03.2005 US 81129
(71) Applicant: Broadcom Corporation, Irvine, CA 92618-7013 (US)
(72) Inventor: Zhu, Qin-Fan, Acton MA 01720 (US)
(74) Representative: Jehle, Volker Armin

(57) **Abstract**

Described herein is a method and system for encoding video data. The design comprises two or more independent encoders that can process portions of a picture in parallel. Within each independent encoder, a higher degree of accuracy is given to edges that are adjacent to other portions. The decoded output of all independent encoders has a smoother more continuous appearance at portion boundaries.

## Description

### RELATED APPLICATIONS

[Not Applicable]

### FEDERALLY SPONSORED RESEARCH OR DEVELOPMENT

[Not Applicable]

### [MICROFICHE/COPYRIGHT REFERENCE]

[Not Applicable]

### BACKGROUND OF THE INVENTION

Video communications systems are continually being enhanced to meet requirements such as reduced cost, reduced size, improved quality of service, and increased data rate. The ITU-T Video Coding Experts Group (VCEG) and the ISO/IEC Moving Picture Experts Group (MPEG) have drafted a video coding standard titled ITU-T Recommendation H.264 and ISO/IEC MPEG-4 Advanced Video Coding (H.264). H.264 includes spatial prediction, temporal prediction, transformation, interlaced coding, and lossless entropy coding.

Although many advanced processing techniques are available, the design of an H.264 compliant video encoder and a method for distributing encoder processes are not specified in the standard. Optimization of the communication system's requirements is dependent on the design of the video encoder.

Limitations and disadvantages of conventional and traditional approaches will become apparent to one of ordinary skill in the art through comparison of such systems with the present invention as set forth in the remainder of the present application with reference to the drawings.

### BRIEF SUMMARY OF THE INVENTION

Described herein are system(s) and method(s) for encoding video data, substantially as shown in and/or described in connection with at least one of the figures, as set forth more completely in the claims.
According to an aspect of the invention, a method for encoding a picture is provided, said method comprising:
encoding a first portion of the picture during a first time interval; and
encoding a second portion of the picture during a second time interval, wherein the first time interval overlaps the second time interval.
Advantageously, the first portion comprises an edge region that is adjacent to the second portion, and wherein encoding of the first portion comprises coding the edge region with higher accuracy.
Advantageously, the first portion comprises an edge region that is adjacent to the second portion, and wherein encoding of the first portion comprises coding the edge region with finer quantization.
Advantageously, the method further comprises:
merging the first coded portion and the second coded portion, thereby producing a coded picture output.
Advantageously, the first portion and the second portion each contains an integer number of macroblocks.
Advantageously, the encoding of the first portion begins at a time that is different than when the encoding of the second portion begins.
According to an aspect of the invention, a system for video encoding is provided, said system comprising:
a first partition processor for encoding a first portion of the picture during a first time interval; and
a second partition processor for encoding a second portion of the picture, during a second time interval, wherein the first time interval overlaps with the second time interval.
Advantageously, the first portion comprises an edge region that includes a set of macroblock that are adjacent to the second portion, and wherein encoding of the first portion comprises coding the edge region with higher accuracy.
Advantageously, the first portion comprises an edge region that includes a set of macroblock that are adjacent to the second portion, and wherein encoding of the first portion comprises coding the edge region with finer quantization.
Advantageously, the system further comprises:
a picture partitioner for dividing a picture into two or more portions.
Advantageously, the system further comprises:
a picture merger for merging the first coded portion and the second coded portion into a coded picture output.
Advantageously, the first partition processor begins encoding the first portion at a time different than when the second partition processor begins encoding the second portion.
Advantageously, the system further comprises:
a host for transferring a set of common parameters to the first partition processor and the second partition processor.
According to an aspect of the invention, an integrated circuit for video encoding is provided, said integrated circuit comprising:
memory for storing a first portion and a second portion of a picture;
a first circuit operable for encoding the first portion of the picture and producing a first coded output; and
a second circuit operable for encoding the second portion of the picture and producing a first coded output, wherein the first coded output is independent of the second coded output.
Advantageously, a quantization is biased to be at least one level finer when applied to a set of macroblocks of the first portion of the picture that is adjacent to the second portion of the picture.
Advantageously, a set of macroblocks of the first portion of the picture that is adjacent to the second portion of the picture is encoded with less information loss.
Advantageously, the integrated circuit further comprises:
a peripheral component interconnect for communicating a set of common parameters that are used in the first circuit and the second circuit.
Advantageously, the set of common parameters includes supplemental enhancement information.
Advantageously, the set of common parameters includes a sequence parameter set.
Advantageously, the set of common parameters includes a picture parameter set.

These and other advantages and novel features of the present invention will be more fully understood from the following description.

### BRIEF DESCRIPTION OF THE DRAWINGS

**FIGURE 1A** is a diagram of a picture divided into two portions in accordance with an embodiment of the present invention;

**FIGURE 1B** is a diagram of a picture divided into three portions in accordance with an embodiment of the present invention;

**FIGURE 2** is a block diagram of an exemplary video encoding system in accordance with an embodiment of the present invention;

**FIGURE 3** is a schedule of video encoding in accordance with an embodiment of the present invention;

**FIGURE 4** is a flow diagram of an exemplary method for video encoding in accordance with an embodiment of the present invention;

**FIGURE 5** is a block diagram of an exemplary picture in the H.264 coding standard in accordance with an embodiment of the present invention;

**FIGURE 6** is a diagram of an exemplary H.264 layer interface in accordance with an embodiment of the present invention;

**FIGURE 7** is a block diagram describing temporally encoded macroblocks in accordance with an embodiment of the present invention;

**FIGURE 8** is a block diagram describing spatially encoded macroblocks in accordance with an embodiment of the present invention; and

**FIGURE 9** is a block diagram of an exemplary partition processor in accordance with an embodiment of the present invention.

### DETAILED DESCRIPTION OF THE INVENTION

According to certain aspects of the present invention, a system and method for distributing the processes in a video encoder are presented. Distribution of processing among two or more separate circuits can enable processing of more data than a single circuit alone. Multiple independent encoders can process portions of a picture in parallel. Within each independent encoder, video data of one portion that borders another portion can be encoded with a higher degree of accuracy and less information loss to reduce the distinction of the portion boundaries. The higher degree of accuracy can be accomplished by a quantizer this is biased to apply a finer quantization to adjacent edges of the portions.

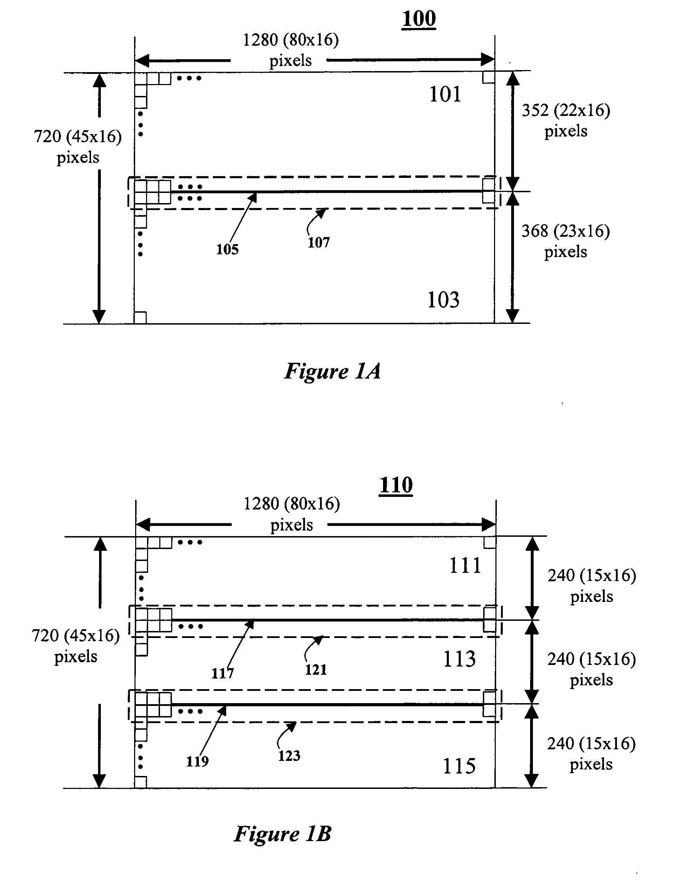

For some video encoding applications, it may be beneficial to distribute the encoding of a picture among two or more independent circuits. **FIGURE 1A** and **FIGURE 1B** depict the division of a picture having dimensions of 1280x720 pixels. In **FIGURE 1A** the picture 100 is divided into a first portion 101 and a second portion 103. For example in certain embodiments of the present invention, picture 100 is divided to designate the first 22 rows of macroblocks (352 rows of pixels) as the first portion 101 and the second 23 rows of macroblocks (368 rows of pixels) as the second portion 103. To improve the smoothness and continuity at the edges of the partitioning, e.g. line 105, the video encoder can treat macroblocks 107 at the edge of the portions specially. The macroblocks 107 at the edge of the portions 101 and 103 can use a quantization level that results in finer steps. In H.264, there are 52 quantization levels. Edge macroblocks are biased such that in a particular scenario a quantizer will use a level that differs from a typical level by at least one.

In **FIGURE 1B** the picture 110 is divided into a first portion 111, a second portion 113, and a third portion 115. In this example, each portion 111, 113, and 115 may comprise 15 rows of macroblocks (240 rows of pixels). As described in regards to **FIGURE 1A,** lines 117 and 119 can be made imperceptible by increasing bit resolution in sections 121 and 123.

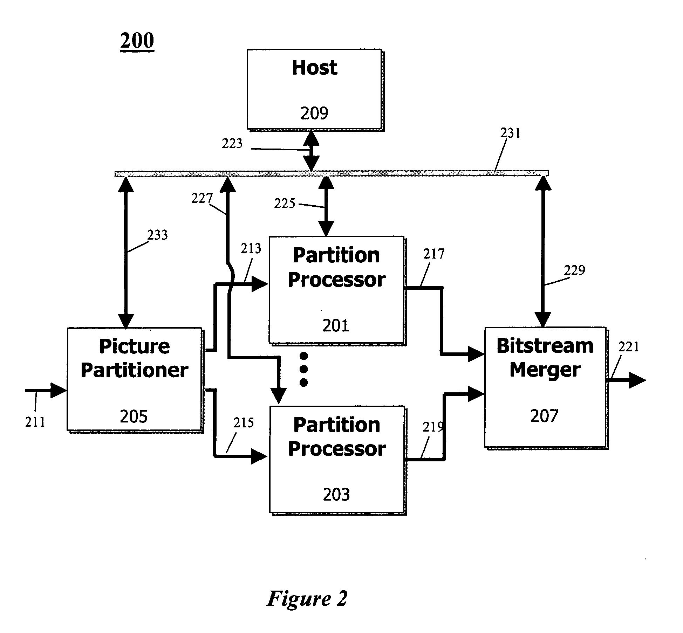

**FIGURE 2** illustrates an exemplary video encoding system 200 in accordance with an embodiment of the present invention. The video encoding system 200 comprises two or more partition processors 201 and 203. A first partition processor 201 is fed a first portion 213 from a picture partitioner 205, and a second partition processor 203 is fed a second portion 215 from the picture partitioner 205. Each partition processor 201 and 203 will perform encoding. A picture merger 207 will combine a first coded portion 217 and a second coded portion 219 to form a coded picture output.

The picture partitioner 205 may be a buffer for storing a current picture 211. Each portion 213 and 215 may contain an address of the current picture. A host 209 may be utilized to share control information 223. SPS and PPS may be held in the first partition processor 201 and/or the second partition processor 203. Alternatively, the host 209 may receive SPS and PPS 233. Side information can be shared through the host 209. The host 209 can poll 225 and 227 each partition processor 201 and 203 through a peripheral component interconnect (PCI) 231, and the bitstream merger 207 can be controlled 229 by the host 209.

In another embodiment, the partition processors 201 and 203 receive the entire picture 211 and process the corresponding partitions. In another embodiment, the host 209 performs the bitstream merging.

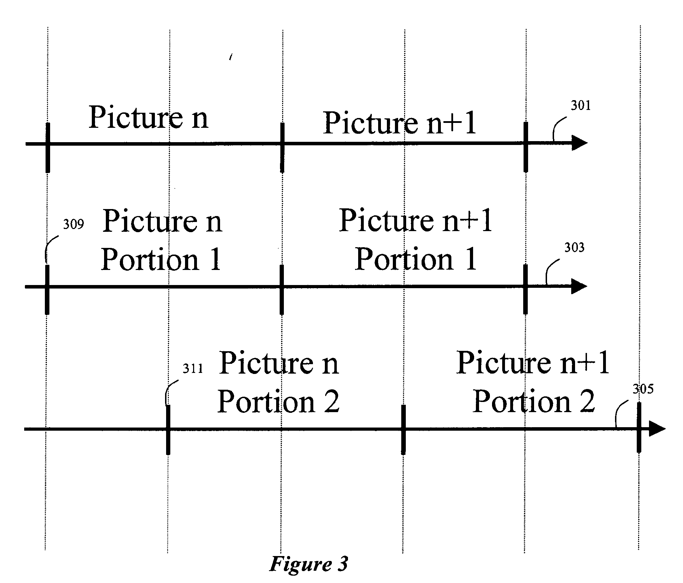

**FIGURE 3** shows a schedule of portion processing. For video encoding with a single-chip processor, a timeline 301 for encoding picture n and picture n+1 is shown. For video encoding with a two-chip processor, a timeline 303 for encoding portion 1 of picture n and portion 1 of picture n+1 is shown, and a timeline 305 for encoding portion 2 of picture n and portion 2 of picture n+1 is shown. The processing is distributed and starting points 309 and 311 for processing may be staggered.

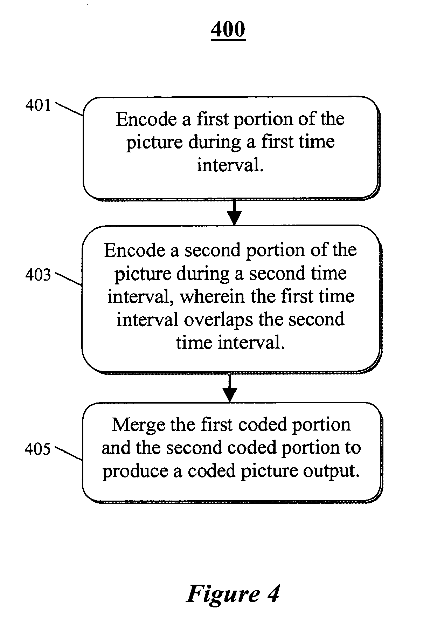

**FIGURE 4** is a flow diagram of an exemplary method for distributing the processing required for video encoding a picture in accordance with an embodiment of the present invention. Encode a first portion of the picture during a first time interval at 401. The first portion can comprise an edge region that is adjacent to a second portion. The encoding of the first portion can comprise coding the edge region with higher accuracy. For example, the encoding can include a quantization, and when quantized, the edge region may have a finer quantization. Finer quantization reduces information loss and produces a higher level of accuracy.

Encode the second portion of the picture during a second time interval, wherein the first time interval overlaps the second time interval at 403. The encoding of the first portion may begin at a time that is different than when the encoding of the second portion begins. An identical method of encoding will be used for the first portion and the second portion. The edge region of the second portion that is adjacent to the first portion may have a finer quantization.

Merge the first coded portion and the second coded portion to produce a coded picture output at 405. To distribute processing in the video encoder and have the distribution transparent to a video decoder, the coded portions are merged into the coded picture output at a consistent rate. Additional encoding may occur after the merge.

The invention can be applied to video data encoded with a wide variety of standards, one of which is H.264. An overview of H.264 will now be given. A description of an exemplary partition processor for H.264 will follow.

### H.264 Video Coding Standard

The ITU-T Video Coding Experts Group (VCEG) and the ISO/IEC Moving Picture Experts Group (MPEG) drafted a video coding standard titled ITU-T Recommendation H.264 and ISO/IEC MPEG-4 Advanced Video Coding which is incorporated herein by reference for all purposes. In the H.264 standard, video is encoded on a macroblock-by-macroblock basis. The generic term "picture" may be used throughout this specification to refer to frames, fields, slices, blocks, macroblocks, or portions thereof.

By using the H.264 compression standard, video can be compressed while preserving image quality through a combination of spatial, temporal, and spectral compression techniques. To achieve a given Quality of Service (QoS) within a small data bandwidth, video compression systems exploit the redundancies in video sources to de-correlate spatial, temporal, and spectral sample dependencies. Statistical redundancies that remain embedded in the video stream are distinguished through higher order correlations via entropy coders. Advanced entropy coders can take advantage of context modeling to adapt to changes in the source and achieve better compaction.

An H.264 encoder can generate three types of coded pictures: Intra-coded (I), Predictive (P), and Bi-directional (B) pictures. An I picture is encoded independently of other pictures. I pictures are referenced during the encoding of other picture types and are coded with the least amount of compression. P picture coding includes motion compensation with respect to the previous I or P picture. A B picture is an interpolated picture that requires both a past and a future reference picture (I or P). The picture type I uses the exploitation of spatial redundancies while types P and B use exploitations of both spatial and temporal redundancies. Typically, I pictures require more bits than P pictures, and P pictures require more bits than B pictures. After coding, the frames are arranged in a deterministic periodic sequence, for example *"IBBPBB"* or *"IBBPBBPBBPBB",* which is called Group of Pictures (GOP).

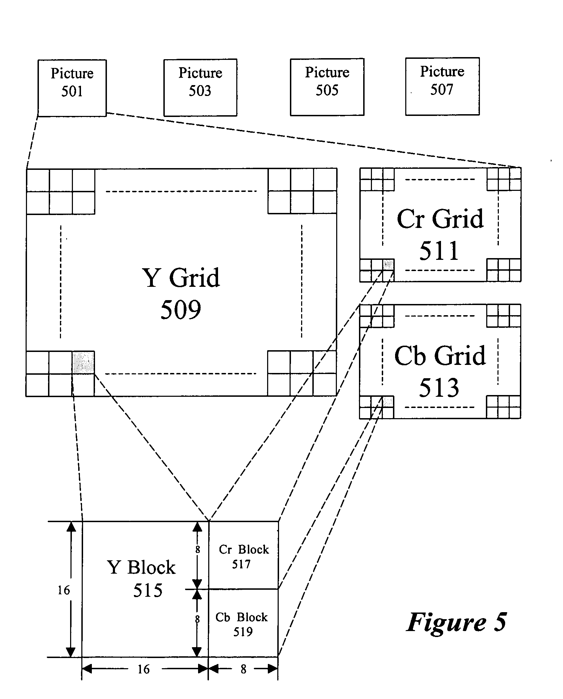

Referring now to **FIGURE 5,** there is illustrated a block diagram of an exemplary picture 501. The picture 501 along with successive pictures 503, 505, and 507 form a video sequence. The picture 501 comprises two-dimensional grid(s) of pixels. For color video, each color component is associated with a unique two-dimensional grid of pixels. For example, a picture can include luma, chroma red, and chroma blue components. Accordingly, these components are associated with a luma grid 509, a chroma red grid 511, and a chroma blue grid 513. When the grids 509, 511, 513 are overlayed on a display device, the result is a picture of the field of view at the duration that the picture was captured.

Generally, the human eye is more perceptive to the luma characteristics of video, compared to the chroma red and chroma blue characteristics. Accordingly, there are more pixels in the luma grid 509 compared to the chroma red grid 511 and the chroma blue grid 513. In the H.264 standard, the chroma red grid 511 and the chroma blue grid 513 have half as many pixels as the luma grid 509 in each direction. Therefore, the chroma red grid 511 and the chroma blue grid 513 each have one quarter as many total pixels as the luma grid 509.

The luma grid 509 can be divided into 16x16 pixel blocks. For a luma block 515, there is a corresponding 8x8 chroma red block 517 in the chroma red grid 511 and a corresponding 8x8 chroma blue block 519 in the chroma blue grid 513. Blocks 515, 517, and 519 are collectively known as a macroblock that can be part of a slice group. Currently, 4:2:0 subsampling is the only color space used in the H.264 specification. This means, a macroblock consist of a 16x16 luminance block 515 and two (subsampled) 8x8 chrominance blocks 517 and 518.

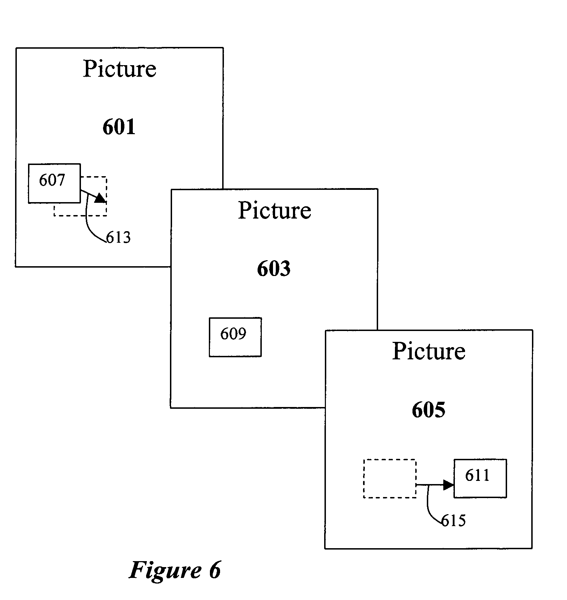

The specific algorithms used for video encoding and compression form a video-coding layer (VCL), and the protocol for transmitting the VCL is called the Network Access Layer (NAL). The H.264 standard allows a clean interface between the signal processing technology of the VCL and the transport-oriented mechanisms of the NAL, so no source-based encoding is necessary in networks that may employ multiple standards. **FIGURE 6** is a diagram of an exemplary H.264 layer interface 600. The VCL 603 efficiently represents video content through the encoding process specified in H.264. The NAL 601 formats the VCL representation of the video and provides header information in a suitable manner for a variety of transport layers or storage media. The NAL 601 depicts the components of an access unit. Data packets within the NAL 601 are NAL units and can be classified as VCL NAL units 617 or non-VCL NAL units 611.

VCL NAL units 617 contain the encoded slice data of a picture. One or more Slice Data NAL Units 607 and 609 can be included in the access unit.
Non-VCL NAL units 611 contain additional control data 605 such as supplemental enhancement information (SEI) and parameter set information. An SEI Unit 619 may contain timing information and other data that enhances the decoded video signal. The SEI Unit 619 is part of the access unit and may precede the VCL NAL Units 617. Parameter set information is important header data that can apply to a large number of VCL NAL units 617. Parameter set information is expected to rarely change and can correspond to a large number of VCL NAL units 611.

A parameter set unit can be a Sequence Parameter Set (SPS) Unit 625 or a Picture Parameter Set (PPS) Unit 621. The SPS Unit 625 applies to a series of consecutive coded video pictures called a coded video sequence, and the PPS Unit 621 applies one or more individual pictures within a coded video sequence. The PPS Unit 621 and the SPS Unit 625 are part of the access unit as well, but the PPS Unit 621 and the SPS Unit 625 can be sent well ahead of the VCL NAL units 617 and can be repeated to provide robustness against data loss. VCL NAL units 617 identify an associated PPS Unit 621, and the PPS Unit 621 identifies an associated SPS Unit 625. Therefore, the parameter set is not necessarily repeated in all of the VCL NAL units 617.

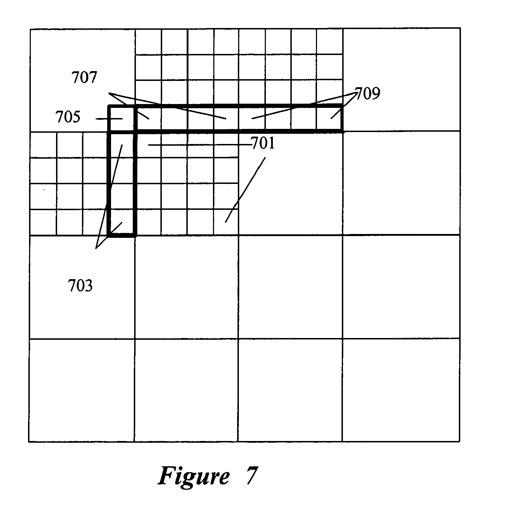

Referring now to **FIGURE 7,** there is illustrated a block diagram describing temporally encoded macroblocks. In bi-directional coding, a current block 709 in the current picture 703 is predicted from a reference block 707 in a previous picture 701 and a reference block 711 in a latter arriving picture 705. Accordingly, a prediction error is calculated as the difference between the weighted average of the reference block 707 and 711 and the current block 709. The prediction error and an identification of the prediction blocks are encoded. Motion vectors 713 and 715 identify the prediction blocks.

The weights can also be encoded explicitly, or implied from an identification of the picture containing the reference blocks. The weights can be implied from the distance between the pictures containing the reference blocks and the picture containing the current block.

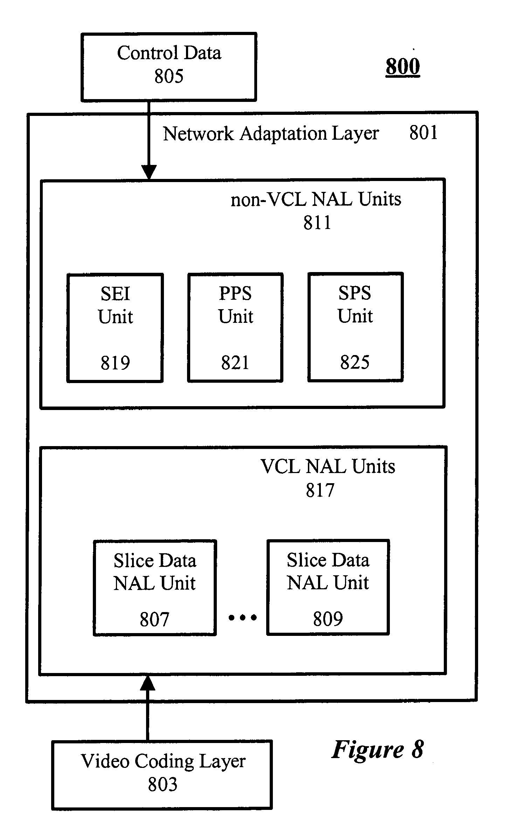

Referring now to **FIGURE 8,** there is illustrated a block diagram describing spatially encoded macroblocks. Spatial prediction, also referred to as intraprediction, involves prediction of picture pixels from neighboring pixels. The pixels of a macroblock can be predicted, in a 16x16 mode, an 8x8 mode, or a 4x4 mode. A macroblock is encoded as the combination of the prediction errors representing its blocks.

In the 4x4 mode, a macroblock 801 is 4x4 blocks. The 4x4 blocks of the macroblock 801 are predicted from a combination of left edge reference blocks 803, a corner reference block 805, top edge reference blocks 807, and top right reference blocks 809. The difference between the macroblock 801 and prediction pixels in the reference blocks 803, 805, 807, and 809 is known as the prediction error. The prediction error is encoded along with an identification of the prediction pixels and prediction mode.

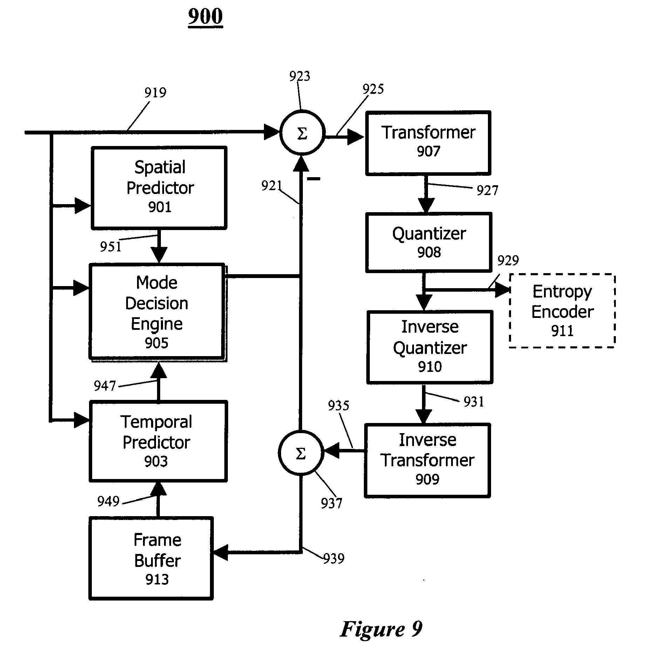

Referring now to **FIGURE 9,** there is illustrated a block diagram of an exemplary partition processor 900. The partition processor 900 comprises a spatial predictor 901, a temporal predictor 903, a mode decision engine 905, a transformer 907, a quantizer 908, an inverse transformer 909, an inverse quantizer 910, and a frame buffer 913. According to certain embodiments of the present invention, the partition processor 900 may process one portion independently of other portions, such that the motion vectors in one portion refer to data in that portion.

The spatial predictor 901 requires only the content of a current picture 919. The spatial predictor 901 receives the current picture 919 and produces spatial predictors 951 corresponding to reference blocks as described in **FIGURE 8.**

Spatially predicted pictures are intra-coded. Luma macroblocks can be divided into 4x4 blocks or 16x16 blocks. There are 9 prediction modes available for 4x4 macroblocks and 4 prediction modes available for 16x16 macroblocks. Chroma macroblocks are 8x8 blocks and have 4 possible prediction modes.

In the temporal predictor 903 (i.e. motion estimator), the current picture 919 is estimated from reference blocks 949 using a set of motion vectors 947. The temporal predictor 903 receives the current picture 919 and a set of reference blocks 949 that are stored in the frame buffer 913. A temporally encoded macroblock can be divided into 16x8, 8x16, 8x8, 4x8, 8x4, or 4x4 blocks. Each block of a macroblock is compared to one or more prediction blocks in another picture(s) that may be temporally located before or after the current picture. Motion vectors describe the spatial displacement between blocks and identify the prediction block(s).

The Mode Decision Engine 905 will receive the spatial predictions 951 and temporal predictions 947 and select the prediction mode according to a rate-distortion optimization. A selected prediction 921 is output.

Once the mode is selected, a corresponding prediction error 925 is the difference 923 between the current picture 919 and the selected prediction 921. The transformer 907 transforms the prediction errors 925 representing blocks into transform values 927. In the case of temporal prediction, the prediction error 925 is transformed along with the motion vectors.

Transformation utilizes Adaptive Block-size Transforms (ABT). The block size used for transform coding of the prediction error 925 corresponds to the block size used for prediction. The prediction error is transformed independently of the block mode by means of a low-complexity 4x4 matrix that together with an appropriate scaling in the quantization stage approximates the 4x4 Discrete Cosine Transform (DCT). The Transform is applied in both horizontal and vertical directions. When a macroblock is encoded as intra 16x16, the DC coefficients of all 16 4x4 blocks are further transformed with a 4x4 Hardamard Transform.

The quantizer 908 quantizes the transformed values 927. The quantizer 908 is biased to apply a finer quantization to adjacent edges of two or more portions. The macroblocks at an edge are treated differently to produce a smoother and more continuous picture and reduce any distinction of the portion boundaries. In H.264, there are 52 quantization levels. Edge macroblocks are biased such that in a particular scenario a quantizer will use a level that differs from a typical level by at least one.

The quantized transform coefficients 929 are also fed into an inverse quantizer 910 to produce an output 931. The output 931 is sent to the inverse transformer 909 to produce a regenerated error 935. The original prediction 921 and the regenerated error 935 are summed 937 to regenerate reference pictures 939 that are stored in the frame buffer 913.

MPEG-4 specifies two types of entropy coding: Context-based Adaptive Binary Arithmetic Coding (CABAC) and Context-based Adaptive Variable-Length Coding (CAVLC). The partition processor 900 may contain an entropy encoder 911 to receive the quantized transform coefficients 929. Alternatively, entropy encoding can be performed following the merging of the quantized transform coefficients 929 from two or more partition processors 900.

The embodiments described herein may be implemented as a board level product, an application specific integrated circuit (ASIC), or with varying levels of a video encoding circuit integrated with other portions of the system as separate co-processors. An integrated circuit may store video data in memory and use an arithmetic logic to encode the video output.

The degree of integration of the video encoder circuit will primarily be determined by the speed and cost considerations. Because of the sophisticated nature of modern processors, it is possible to utilize a commercially available processor, which may be implemented external to an ASIC implementation.

If the processor is available as an ASIC core or logic block, then the commercially available processor can be implemented as part of an ASIC device wherein certain functions can be implemented in firmware as instructions stored in a memory. Alternatively, the functions can be implemented as hardware accelerator units controlled by the processor.

While the present invention has been described with reference to certain embodiments, it will be understood by those skilled in the art that various changes may be made and equivalents may be substituted without departing from the scope of the present invention.

Additionally, many modifications may be made to adapt a particular situation or material to the teachings of the present invention without departing from its scope. For example, although the invention has been described with a particular emphasis on MPEG-4 encoded video data, the invention can be applied to video data encoded with a wide variety of standards.

Therefore, it is intended that the present invention not be limited to the particular embodiment disclosed, but that the present invention will include all embodiments falling within the scope of the appended claims.

## Claims

1. A method for encoding a picture, said method comprising:
encoding a first portion of the picture during a first time interval; and
encoding a second portion of the picture during a second time interval, wherein the first time interval overlaps the second time interval.

2. The method of claim 1, wherein the first portion comprises an edge region that is adjacent to the second portion, and wherein encoding of the first portion comprises coding the edge region with higher accuracy.

3. The method of claim 1, wherein the first portion comprises an edge region that is adjacent to the second portion, and wherein encoding of the first portion comprises coding the edge region with finer quantization.

4. The method of claim 1, wherein the method further comprises:
merging the first coded portion and the second coded portion, thereby producing a coded picture output.

5. A system for video encoding, said system comprising:
a first partition processor for encoding a first portion of the picture during a first time interval; and
a second partition processor for encoding a second portion of the picture, during a second time interval, wherein the first time interval overlaps with the second time interval.

6. The system of claim 5, wherein the first portion comprises an edge region that includes a set of macroblock that are adjacent to the second portion, and wherein encoding of the first portion comprises coding the edge region with higher accuracy.

7. The system of claim 5, wherein the first portion comprises an edge region that includes a set of macroblock that are adjacent to the second portion, and wherein encoding of the first portion comprises coding the edge region with finer quantization.

8. An integrated circuit for video encoding, said integrated circuit comprising:
memory for storing a first portion and a second portion of a picture;
a first circuit operable for encoding the first portion of the picture and producing a first coded output; and
a second circuit operable for encoding the second portion of the picture and producing a first coded output, wherein the first coded output is independent of the second coded output.

9. The integrated circuit of claim 8, wherein a quantization is biased to be at least one level finer when applied to a set of macroblocks of the first portion of the picture that is adjacent to the second portion of the picture.

10. The integrated circuit of claim 8, wherein a set of macroblocks of the first portion of the picture that is adjacent to the second portion of the picture is encoded with less information loss.
